# FASCICULE DE BREVET EUROPEEN

(11) **EP 0 649 205 B1**
(45) Date de publication et mention de la délivrance du brevet: **19.08.1998**
(21) Numéro de dépôt: 94410090.8
(22) Date de dépôt: 13.10.1994
(51) Int. Cl.: H02B 1/30, H02B 1/01

(54) **Liaison d'angle pour armoire, et armoire électrique comportant de telles liaisons**
Schrank mit Eckverbindung und ein Schaltschrank mit solchen Verbindungen
Corner connection for a cabinet and a switch cabinet incorporating such connections

(30) Priorité: 18.10.1993 FR 9312480
(43) Date de publication de la demande: 19.04.1995
(73) Titulaire: SCHNEIDER ELECTRIC SA, 92100 Boulogne Billancourt (FR)
(72) Inventeur: Bossan, Edmond, F-38050 Grenoble Cédex 09 (FR); Charbonneau, Michel, F-38050 Grenoble Cédex 09 (FR); Laboch, Kazimir, F-38050 Grenoble Cédex 09 (FR); Pin, Jean-Pierre, F-38050 Grenoble Cédex 09 (FR)
(74) Mandataire: Ritzenthaler, Jacques

(56) Documents cités:
- AU-A- 490 813
- FR-A- 1 317 272
- FR-A- 2 566 222
- GB-A- 1 112 547
- GB-A- 2 231 117
- US-A- 3 981 251

## Description

L'invention concerne d'une manière générale le domaine des armoires et des coffrets, notamment celui des armoires et coffrets utilisés pour loger de l'appareillage électrique et/ou électronique.

Elle vise plus particulièrement une liaison d'angle pour une telle armoire ou un tel coffret, permettant l'assemblage selon un trièdre, de profilés et/ou de montants, ainsi qu'une armoire de forme sensiblement parallélépipédique comportant une telle liaison d'angle à chacun de ses huit sommets.

Pour la suite, le terme "armoire" regroupera aussi bien une armoire qu'un coffret.

De manière connue, par exemple d'après les documents FR-A-2,681,403, EP-A-402,276 et EP-A-144,995, une telle armoire est composée d'une ossature parallélépipédique réalisée avec 12 tronçons de profilé creux et identiques, assemblés par des liaisons d'angle, et d'un habillage réalisé avec des panneaux . La liaison d'angle est formée par un tripode, monobloc ou non, dont les trois pieds viennent s'emboîter respectivement à l'intérieur des trois tronçons de profilé correspondants.

Une telle liaison, de prime abord très attrayante, présente toutefois plusieurs inconvénients en termes de coût, de rigidité mécanique, de souplesse d'usage, et de confort lors de l'installation de l'appareillage électrique à l'intérieur d'une telle armoire. Tout d'abord, le tripode est fragile car soumis à des contraintes mécaniques importantes; il est aussi relativement complexe de par sa forme, et par conséquent coûteux à fabriquer. Par ailleurs, la rigidité de ce type de liaison n'est pas toujours satisfaisante, car fortement dépendante des dimensions internes du profilé; par conséquent, pour obtenir une bonne rigidité, il faut resserrer les tolérances de fabrication du profilé, induisant par là même un surcoût en matière de profilage. En outre, étant donné que les pieds du tripode viennent s'emboîter dans les tronçons de profilé, il est impossible de démonter l'un ou l'autre des montants verticaux de l'ossature, une fois l'armoire déshabillée de ses quatre panneaux verticaux, sans avoir préalablement au moins partiellement démonté le toit de l'armoire, ou tout du moins sans déformation de l'ossature qui risque à son tour de déformer les profilés au niveau des liaisons d'angle et ainsi affaiblir la rigidité de l'ossature. Finalement, l'assemblage par tripode est également fort coûteux en main d'oeuvre, car il exige le serrage/desserrage d'un grand nombre de vis. Il en résulte, que lors de l'installation de l'appareillage électrique à l'intérieur de l'armoire, la personne chargée de l'opération soit perd du temps au démontage partiel du toit pour enlever un montant de l'ossature de manière à bénéficier d'un meilleur confort d'accès à l'intérieur de l'armoire, soit accepte la gêne occasionnée par la présence des quatre montants verticaux de l'ossature, ce qui représente également une perte de temps.

Par ailleurs, le document FR-A-1.317.272 divulgue un dispositif de liaison angulaire pour trois barres profilées formant entre elles un trièdre trirectangle. L'organe de liaison comprend un barreau amovible disposé diagonalement entre deux barres profilées et muni à chacune de ses extrémités d'un coulisseau déplaçable dans le creux de la barre profilée correspondante. Chaque coulisseau présente une face d'appui parallèle à l'axe de la troisième barre profilée qui vient se plaquer, par l'intermédiaire d'un moyen de serrage, contre une aile de la troisième barre profilée.

Une telle liaison permet de fixer la troisième barre profilée à n'importe quel endroit de sa longueur, car la fixation repose uniquement sur les frottements induits par le serrage entre les faces d'appui des coulisseaux et les ailes de la troisième barre profilée. Elle ne permet donc pas un positionnement précis de la troisième barre profilée par rapport aux deux autres barres profilées.

En outre, la tige de serrage est fortement sollicitée en cisaillement lors de la manutention d'un élément de construction ainsi assemblé. Finalement, tout léger desserrage de la liaison angulaire rend cette dernière brinquebalante pour l'ensemble des trois barres profilées.

La présente invention vise donc à remédier à ces inconvénients.

Selon un premier aspect de l'invention, il s'agit d'une liaison d'angle pour armoire, telle que définie dans la revendication 1.

De préférence, le troisième angle est égal ou légèrement inférieur à l'angle complémentaire à 360° du second angle, de manière à assurer un effet de coincement des premières surfaces entre les secondes surfaces, les secondes surfaces pouvant par exemple se couper selon une ligne imaginaire.

De préférence, le pied comporte en outre deux sixièmes surfaces parallèles au plan bissecteur du second angle .

En pratique, le gousset peut présenter une troisième surface parallèle audit axe longitudinal, perpendiculaire au plan bissecteur du troisième angle, en retrait de la ligne imaginaire et destinée à coopérer avec une vis ou un boulon dont l'axe se situe dans le plan bissecteur du troisième angle, perpendiculairement à l'axe longitudinal; de manière alternative, le gousset comporte une pièce d'angle présentant deux ailes qui forment entre elles le troisième angle et dont le contour correspond à la section des tronçons de profilé.

Le pied peut en outre recevoir un montant perpendiculaire audit cadre plan.

Selon un premier mode particulier de réalisation de la liaison d'angle, les deux tronçons de profilé sont creux, de manière à ce que les deux secondes surfaces puissent venir respectivement s'encastrer, au moins partiellement, dans les deux tronçons de profilé creux et éventuellement être soudées à ces tronçons de profilé; de préférence, ces derniers présentent alors chacun une quatrième surface intérieure au profilé et parallèle au cadre plan, qui prend appui sur des cinquièmes surfaces qui appartiennent au pied et qui sont perpendiculaires à l'axe longitudinal, de manière à ce que le pied vienne simultanément s'emboîter par simple translation, selon une direction parallèle au cadre plan, dans le creux de chacun des deux tronçons de profilé.

Selon un second mode particulier de réalisation de la liaison d'angle, les quatrièmes surfaces sont réalisées par des ouvertures pratiquées dans des ailes du gousset, et les cinquièmes surfaces sont portées par des ergots disposés en saillie sur les premières surfaces.

Selon un second aspect de l'invention, il s'agit d'une armoire pour appareillage électrique telle que définie dans la revendication 10.

De préférence, chaque pied comporte en outre un dispositif de fixation par exemple par queue-d'aronde, destiné à recevoir un accessoire, tel qu'un gond pour une charnière de porte.

Les piliers incluent soit uniquement des montants creux ouverts ou fermés, reliant respectivement deux à deux, les pieds des liaisons d'angle, soit uniquement des poteaux reliant respectivement des points intermédiaires des tronçons de profilé associé au toit à des points intermédiaires correspondants des tronçons de profilé associé au socle, soit une quelconque combinaison de tels montants et de tels poteaux.

De préférence, les tronçons de profilé formant le cadre du toit et/ou du socle sont identiques. Ils peuvent notamment être intégrés aux panneaux d'habillage du socle et du toit. En pratique, ils sont creux et présentent une section rectangulaire ou trapézoïdale dont les faces orientées vers l'intérieur du volume parallélépipédique sont munis de perforations régulièrement espacées. En outre, ils présentent une aile disposée en saillie, dirigée vers l'extérieur de l'armoire et formant une première gouttière qui rejoint une seconde gouttière associé au pied.

Chaque pied peut en outre comporter un bec verseur permettant d'évacuer l'eau collectée par la gouttière.

Selon un premier mode de réalisation des montants, les montants sont réalisés dans un premier profilé fermé qui présente une section ayant la forme d'un triangle rectangle isocèle dont l'angle droit est dirigé vers l'intérieur de l'armoire, dont les deux angles à la base forment respectivement deux arêtes d'étanchéité dirigées vers l'extérieur de l'armoire et dont les deux côtés perpendiculaires sont également munis de perforations régulièrement espacées.

Selon un second mode de réalisation des montants, les montants sont réalisés dans un second profilé ouvert qui présente deux arêtes d'étanchéité dirigées vers l'extérieur de l'armoire.

Les goussets disposés aux huit sommets sont adaptés à recevoir soit des moyens de fixation pour des accessoires, tels que des anneaux de levage, des moyens de réglage du niveau de l'armoire, ou encore des moyens de fixation sur une embase.

Les piliers de l'armoire selon l'invention, sous la forme de montants et/ou de poteaux, sont donc tous individuellement amovibles sans démontage du socle et/ou du toit.

D'autres avantages de l'invention apparaîtront mieux à la lecture de la description détaillée ci-après, en référence aux figures, dans lesquelles :
- la figure 1 est une vue en perspective éclatée d'un premier mode de réalisation de la liaison d'angle selon l'invention avant assemblage des différents éléments;
- la figure 2A est une vue en perspective du cadre plan selon la figure 1 après assemblage des deux tronçons de profilé, selon le premier mode de réalisation de la liaison d'angle;
- la figure 2B est une vue en perspective du premier mode de réalisation la liaison d'angle selon la figure 1 après assemblage final du pied;
- la figure 3 est en vue en perspective éclatée d'une armoire selon un premier mode de réalisation;
- la figure 4 est en vue en perspective éclatée d'une armoire selon un second mode de réalisation; et
- la figure 5 est en vue en perspective éclatée d'une armoire selon un troisième mode de réalisation;
- la figure 6 est une coupe horizontale d'une armoire selon le premier mode de réalisation;
- la figure 7 est une coupe horizontale d'une armoire selon le second mode de réalisation.
- la figure 8 est une vue en perspective éclatée d'un second mode de réalisation de la liaison d'angle selon l'invention avant assemblage des différents éléments;
- les figures 9 et 10 sont respectivement des vues de côté et de dessus du pied du second mode de réalisation de la liaison d'angle selon la figure 8; et
- les figures 11 et 12 sont respectivement des vues en coupe et en perspective du gousset du second mode de réalisation de la liaison d'angle selon la figure 8.

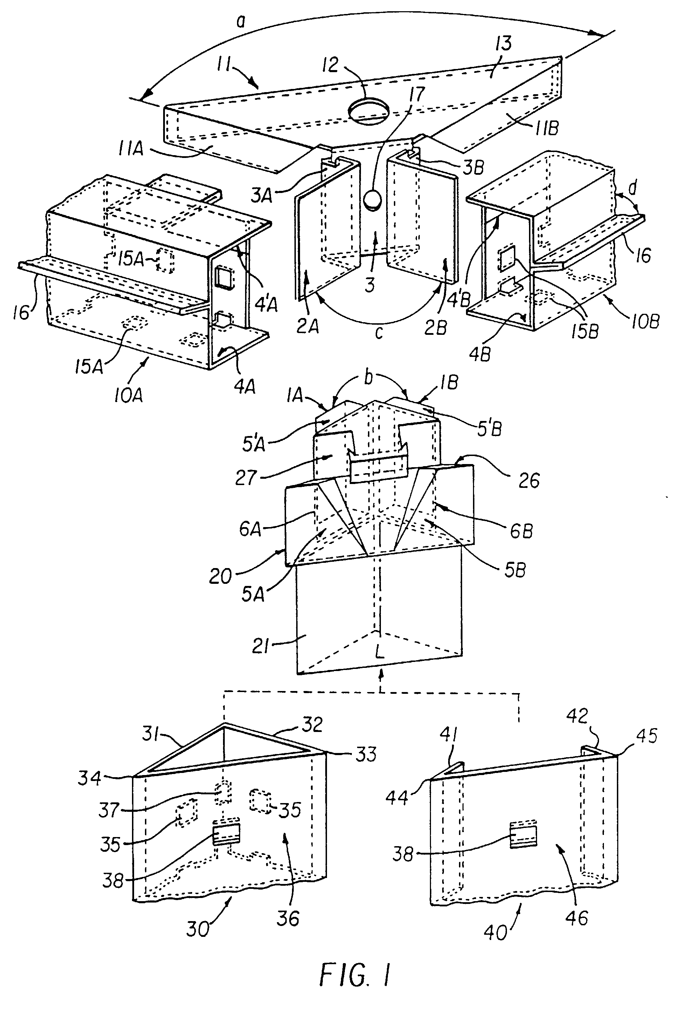

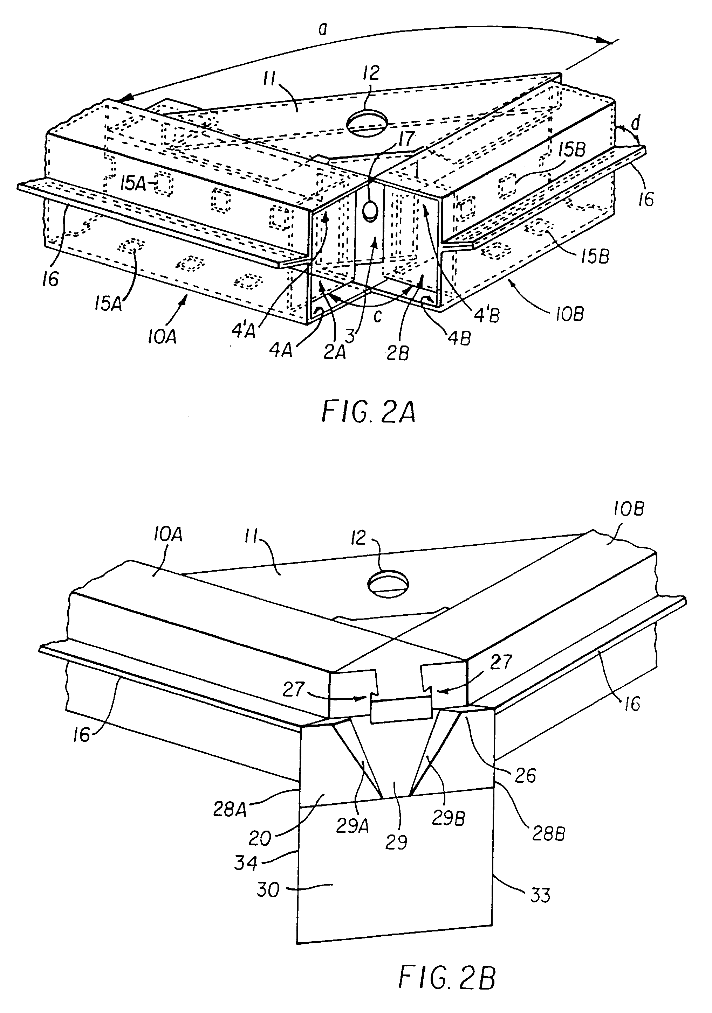

En référence aux figures 1, 2A et 2B, la liaison d'angle selon un premier mode de réalisation de l'invention est destinée à solidariser d'une part deux tronçons 10A et 10B de profilé, formant ainsi un cadre plan, et d'autre part un pied 20 présentant un axe longitudinal L sensiblement perpendiculaire au cadre 10 et pourvu de deux premières surfaces 1A et 1B parallèles à l'axe longitudinal L. Les deux tronçons de profilé 10A et 10B forment entre eux un premier angle saillant a, et les deux surfaces 1A et 1B portées par le pied 20 forment entre elles un second angle b.

Les tronçons 10A et 10B de profilé sont reliés entre eux par un gousset 11 qui, de préférence, est réalisé dans une plaque de tôle découpée et pliée. Selon un mode de réalisation possible, le gousset 11 comprend une plaque 13 parallèle au cadre plan et deux ailes 11A et 11B perpendiculaires à la plaque 13, qui viennent, par exemple, se souder ou se visser sur les tronçons de profilé 10A et 10B.

Selon l'invention, le gousset 11 comprend en outre deux secondes surfaces 2A et 2B, perpendiculaires au cadre plan, donc parallèles à l'axe longitudinal L, respectivement disposées de part et d'autre du plan bissecteur de l'angle a. Ces deux secondes surfaces 2A et 2B forment entre elles un angle c sensiblement complémentaire à 360° de l'angle b. De préférence, ces deux surfaces 2A et 2B ne se coupent pas selon une arrête commune, mais selon une ligne imaginaire, et sont reliées entre elles par les surfaces 3A, 3 et 3B du gousset 11 qui sont également parallèles à l'axe longitudinal L.

Un moyen de serrage, par exemple une vis ou un boulon (non représentée) fixée de l'intérieur du trièdre traverse un trou 17 pratiqué dans la surface 3 du gousset 11 qui est perpendiculaire au plan bissecteur de l'angle a, et vient prendre prise sur un taraudage (non représenté) dans le pied 20; l'axe de cette vis se situe dans le plan bissecteur de l'angle c, perpendiculairement à l'axe longitudinal L, donc parallèle au cadre plan. On peut également envisager l'introduction de la vis ou du boulon par l'extérieur du trièdre.

De préférence, l'angle c est égal ou légèrement inférieur au complémentaire à 360° de l'angle b, de manière à ce que lors du serrage de la vis, on obtienne un effet de coincement des premières surfaces 1A et 1B entre les deux secondes surfaces 2A et 2B. Cet effort de coincement se trouve renforcé du fait que les surfaces 2A et 2B se coupent suivant une ligne imaginaire en retrait de la surface 3, les surfaces 3A, 3 et 3B agissant comme un ressort disposé entre les surfaces 2A et 2B. A titre d'exemple non limitatif, l'angle a= 90°, l'angle b = 270 et l'angle c entre 88° et 90°.

Une telle liaison d'angle dispose d'une très bonne rigidité d'une part, du fait de la présence du gousset 11 qui relie rigidement les deux tronçons 10A et 10B de profilé, et d'autre part du fait que les efforts parallèles à la direction longitudinal L sont encaissés par les forces de frottements des surfaces 1A et 1B sur les surfaces 2A et 2B suite au serrage de la vis. De plus elle permet de relâcher les tolérances de fabrication liées au profilage des tronçons de profilé.

En outre, le pied 20 présente l'avantage d'être amovible par serrage/desserrage d'une seule vis, puis simple translation du pied 20 , selon une direction parallèle au cadre plan et contenu dans le plan bissecteur de l'angle c.

Selon un mode particulier de réalisation, les tronçons 10A et 10B de profilé sont creux et les surfaces 2A et 2B viennent respectivement s'encastrer, au moins partiellement, dans le creux de chacun des deux tronçons 10A et 10B de profilé, comme visible sur la figure 2A. Ces deux surfaces 2A et 2B peuvent en outre être directement soudées sur l'intérieur des tronçons 10A et 10B de profilé.

Selon ce même mode particulier de réalisation, les tronçons 10A et 10B de profilé creux présentent une section rectangulaire et disposent donc chacun deux quatrièmes surfaces 4A, 4'A, 4B et 4'B parallèles au cadre plan, qui servent respectivement d'appuis complémentaires à des cinquièmes surfaces 5A, 5'A, 5B et 5'B appartenant au pied 20 et perpendiculaires à l'axe longitudinal L. Le pied 20 s'apparente alors à un tripode. On notera que des sixièmes surfaces 6A et 6B qui délimitent latéralement, parallèlement à la direction longitudinale L, les premières surfaces 1A et 1B, sont parallèles entre elles, permettant ainsi d'introduire simultanément, par simple translation selon une direction parallèle au cadre plan et contenue dans le plan bissecteur de l'angle c, les premières surfaces 1A et 1B dans les tronçons de profilé 10A et 10B, contre les secondes surfaces 2A et 2B. Ces sixièmes surfaces 6A et 6B sont parallèles au plan bissecteur de l'angle b

Un tel mode de réalisation confère une excellente rigidité car les efforts parallèles à la direction longitudinale L sont simultanément encaissés d'une part, par les frottements entre les premières surfaces 1A et 1B, et les secondes surfaces 2A et 2B, et d'autre part, par les appuis formés par les quatrièmes surfaces 4A, 4'A, 4B, 4'B sur les cinquièmes surfaces 5A 5'A, 5B, 5'B.

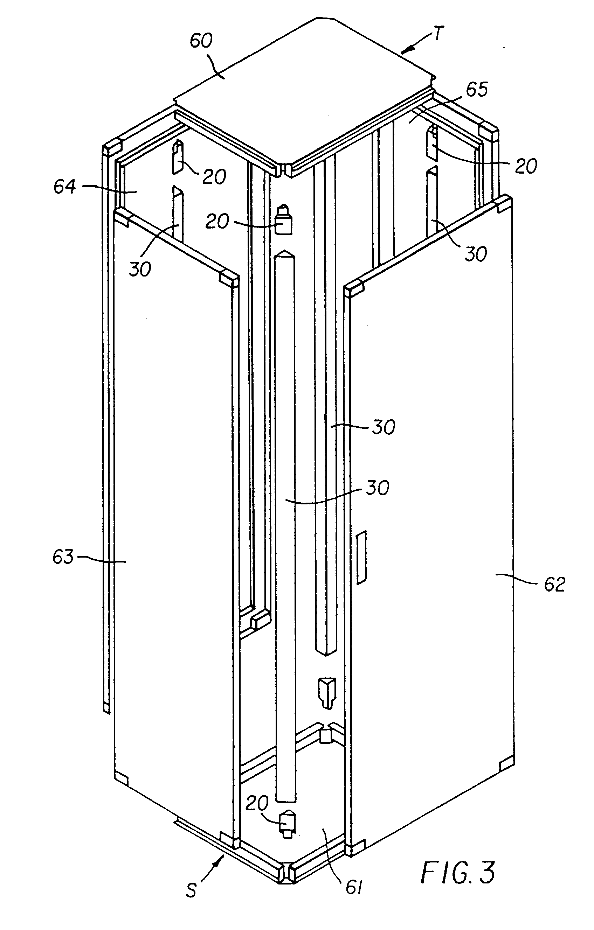

Le pied 20 présente une section de forme généralement triangulaire et présente une partie 21 de section triangulaire sur laquelle vient s'emboîter, à titre d'exemple, un montant triangulaire creux 30 ou un montant ouvert 40, dont la finalité sera décrite plus en détail en référence aux figures 3, 4 et 5 relatives à différents modes de réalisation de l'armoire.

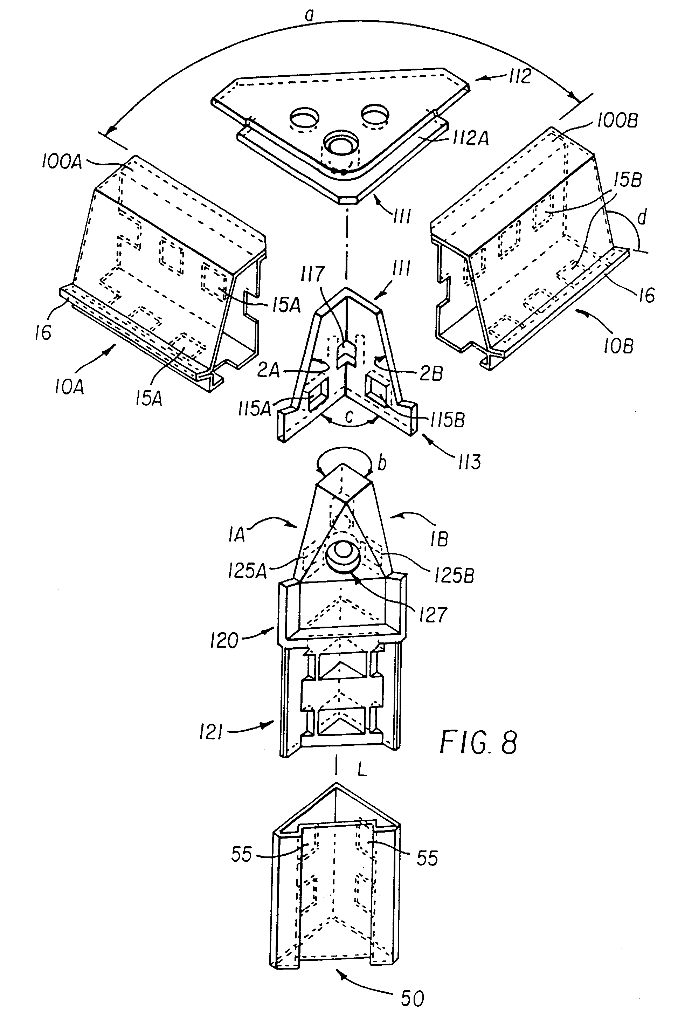

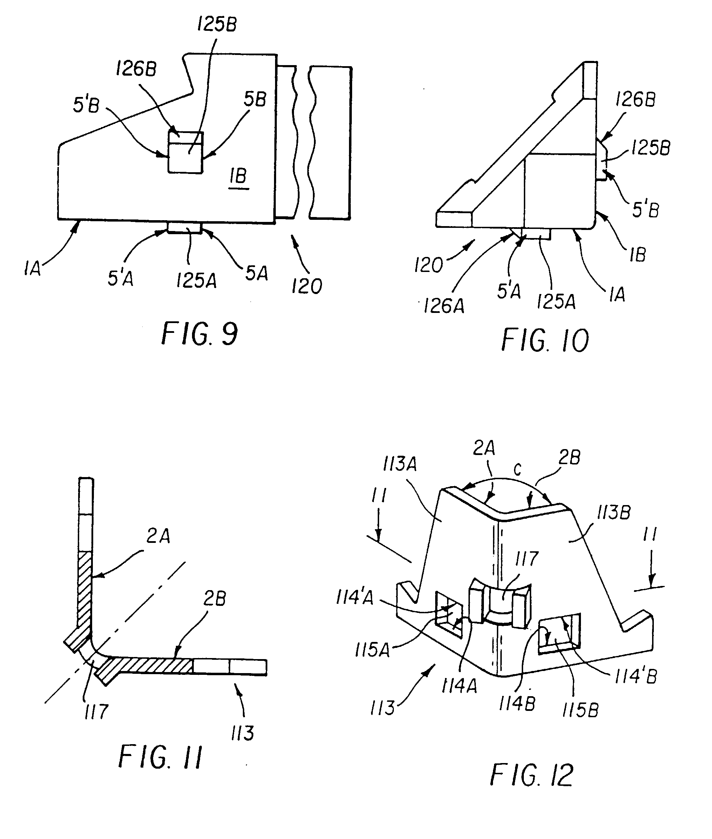

Les figures 8 à 12 correspondent à un second mode de réalisation de la liaison d'angle selon l'invention, dans lequel les tronçons 10A et 10B portent, par souci de commodité, les mêmes références que celles décrites en relation avec le premier mode de réalisation. Les tronçons 10A et 10B sont creux et leur section est trapézoïdale, les deux faces dirigées vers l'intérieur de la liaison d'angle sont munies de perforations 15A et 15B.

Contrairement au premier mode de réalisation, le gousset 11 peut être formé de deux pièces distinctes, à savoir une plaque 112 sensiblement triangulaire et une pièce d'angle 113.

La plaque 112 présente une gorge 112A formant une équerre dans le plan de la plaque dans laquelle viennent s'emboîter les ailes 100A et 100B associées respectivement aux tronçons 10A et 10B. La plaque 112 est ensuite fixée aux tronçons 10A et 10B par une soudure selon l'axe des tronçons. On notera que cette plaque 112 n'est pas indispensable dans le cadre de l'invention, le gousset 111 pouvant très bien se résumer à la pièce d'angle 113.

Cette pièce d'angle 113 est réalisée par découpage et pliage d'une tôle et présente deux ailes 113A et 113B qui forment entre elles un angle rentrant c, de préférence sensiblement égal à 90°; les faces intérieures des ailes 113A et 113B portent les secondes surfaces 2A et 2B, perpendiculaires au cadre plan formé par les tronçons 10A et 10B de profilé.

Le contour des ailes 113A et 113B correspond de préférence à la forme de la section des tronçons 10A, 10B de profilé, la pièce d'angle 113 pouvant ainsi être soudée pratiquement sur toute la longueur de son périmètre respectivement aux deux tronçons 10A et 10B de profilé, de manière à former le cadre plan destiné à recevoir un pied 120; la soudure permet en outre d'assurer l'étanchéité de la liaison d'angle, une fois le pied 120 monté.

Le pied 120 présente un axe longitudinal perpendiculaire au cadre plan formé par les tronçons 10A et 10B, et comporte une partie 121 sur laquelle vient s'emboîter par exemple un montant creux 50 muni de deux rangées de trous 55. Le pied 120, est pourvu de deux premières surfaces 1A et 1B parallèles à son axe longitudinal, et formant entre elles un angle b sensiblement complémentaire à 360° de l'angle c.

Un moyen de serrage (non représenté), par exemple un boulon et un écrou, traverse une ouverture 117 de la pièce d'angle 113 et un trou 127 du pied 120, pour plaquer les deux premières surfaces 1A et 1B associées au pied 120 contre les deux secondes surfaces 2A et 2B associées à la pièce d'angle 113.

La pièce d'angle comporte en outre deux ouvertures 115A et 115B, par exemple de forme rectangulaire, pratiquées respectivement dans les deux ailes 113A et 113B et destinées à coopérer avec deux ergots 125A et 125B associés au pied 120.

Les ouvertures 115A et 115B présentent respectivement des surfaces 114A, 114'A et 114B, 114'B, dénommées quatrièmes surfaces par analogie au premier mode de réalisation, qui coopèrent avec des surfaces 5A, 5'A et 5B, 5'B portées par les ergots 125A et 125B, ces dernières étant dénommées cinquièmes surfaces par analogie au premier mode de réalisation.

On notera que les surfaces 126A et 126B dénommées sixièmes surfaces, qui délimitent latéralement, parallèlement à la direction longitudinale du pied 120, les ergots 125A et 125B, sont parallèles entre elles et au plan bissecteur de l'angle b , permettant ainsi d'introduire simultanément, par simple translation selon une direction parallèle au cadre plan, les ergots 125A et 125B dans les ouvertures 115A et 115B.

En d'autres termes, les ergots 125A et 125B constituent les amorces de deux pieds d'un tripode qui viennent s'emboîter dans les ouvertures 115A et 115B et qui, contrairement au tripode traditionnel, permet le montage et le démontage de l'ensemble pied 120 et montant 50 par simple translation parallèle au cadre plan formé par les tronçons 10A et 10B.

Une comparaison des deux modes de réalisation de la liaison d'angle décrits ci-dessus, montre que les cinquièmes surfaces 5A, 5'A; 5B et 5'B sont portées par le pied 20 ou 120; en ce qui concerne les quatrièmes surfaces, référencées 4A, 4'A, 4B et 4'B selon le premier mode ou 114A, 114'A, 114B, 114'B selon le second mode, elles appartiennent respectivement aux tronçons de profilé 10A, 10B ou à la pièce d'angle 113 du gousset 111, soudée aux tronçons 10A, 10B de profilé.

On comprendra aisément qu'une combinaison des deux modes de réalisation de la liaison d'angle est également possible, à savoir deux jeux de quatrièmes surfaces, dont l'un appartiendrait aux tronçons 10A, 10B de profilé et dont l'autre appartiendrait à la pièce d'angle 113, ces deux jeux de quatrièmes surfaces venant s'appuyer sur deux jeux de cinquièmes surfaces appartenant au pied.

L'existence de ces quatrièmes et cinquièmes surfaces d'appui permet de minimiser les efforts de cisaillement au niveau des moyens de serrage, efforts qui d'après les études menées par le demandeur, sont particulièrement importants lors de la manutention et du transport par route d'armoires assemblées comportant des liaisons d'angle démontables.

### L'armoire

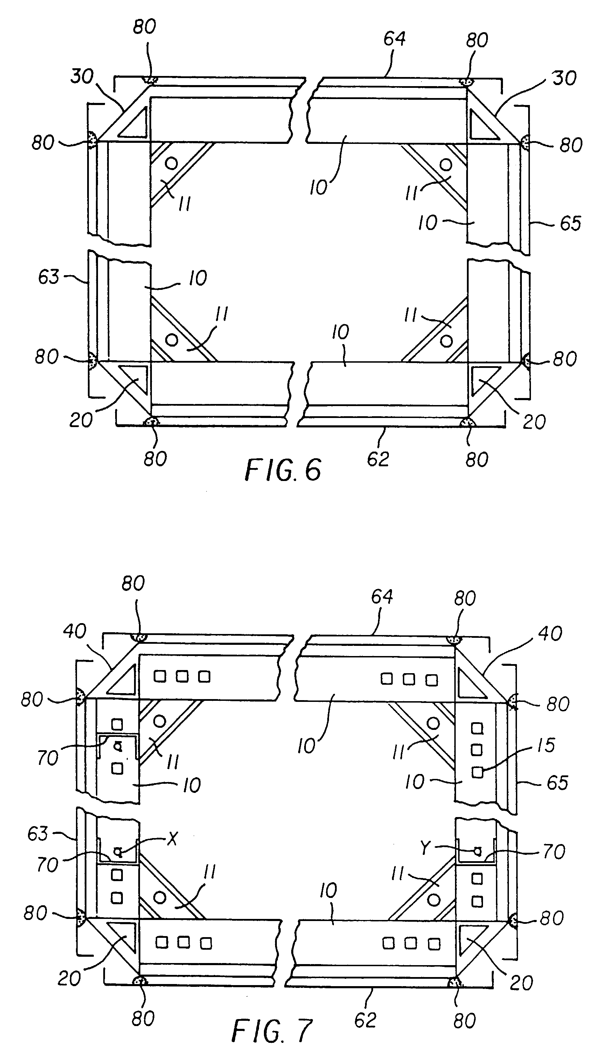

Selon une caractéristique commune aux trois modes de réalisation de l'armoire qui vont être décrits par la suite en référence aux figures 3 à 7, l'armoire comprend un socle S et un toit T, comportant chacun un cadre rectangulaire formé par quatre tronçons 10 de profilé (figures 6 et 7) reliés entre eux deux à deux par l'intermédiaire d'un gousset 11 ou 111 et d'un pied 20 ou 120 comme décrit ci-dessus. L'armoire comprend donc huit liaisons d'angle 20 ou 120 identiques. Des piliers formés par des montants 30, 40 ou 50 et/ou des poteaux 70 relient le cadre du toit T à celui du socle S.

Par souci de clarté, les figures 3 à 7 ne portent que les références 11 et 20, étant entendu qu'elles englobent également les références 111 et 120.

L'habillage de l'armoire est réalisée avec des panneaux: à savoir un panneau 60 pour le toit T, un panneau 61 pour le socle S, trois panneaux 63, 64 et 65 respectivement pour les faces verticales gauche, arrière et droite de l'armoire, et un panneau sous la forme d'une porte 62 située à l'avant de l'armoire.

On notera que les tronçons 10 de profilé du toit T et/ou du socle S peuvent être obtenus par tronçonnage d'un profilé correspondant, ou alors, selon une technique connue en soi, être directement intégrés dans les panneaux 60 et/ou 61 par pliage successif le long de la périphérie de la plaque formant le panneau; on pourra par exemple se reporter au document DE-A-2,338,570 pour plus de détails en ce qui concerne la technique d'intégration des tronçons de profilé dans un panneau d'habillage.

Les tronçons 10 de profilé peuvent également être munis d'une aile 16 (visible sur les figures 1, 2A et 2B ou 8), disposée en saillie et dirigée vers l'extérieur de l'armoire; cette aile 16 forme un angle d légèrement inférieur à 90° de manière à former une gouttière dont l'extrémité sert de surface d'appui pouvant coopérer ,si nécessaire, avec un joint d'étanchéité 80 préalablement déposé sur l'intérieur des panneaux verticaux 63 à 65 et de la porte 62.

Chaque pied 20 ou 120, situé à chacun des huit sommets de l'armoire, peut être muni d'une gouttière 26 (visible sur les figures 1 et 2B) située dans le prolongement de la gouttière formée par l'aile 16, de manière à assurer une continuité, sur toute la périphérie du toit ainsi que celle du socle, de la gouttière et de la surface d'appui destiné à coopérer, si nécessaire, avec le joint d'étanchéité.

Chaque pied 20 ou 120 peut en outre comporter un bec verseur 29 délimité par les faces 29A et 29B et destiné à l'évacuation de l'eau collectée par la gouttière formée par les ailes 16. (figure 2B).

On notera en référence à la figure 2B, que les ailes 16, les arêtes 28A et 28B de la partie 21 du pied 20, et les arêtes 33 et 34 de montant 30 forment des cadres continus d'appui destinés à coopérer avec un joint d'étanchéité 80.

Chaque pied 20 ou 120 peut en outre est muni d'un dispositif de fixation 27, par exemple par queue-d'aronde (visible sur les figures 1 et 2B), dirigé vers l'extérieur de l'armoire et adapté à recevoir un accessoire, tel qu'un gond (non représenté) pour une charnière (non représentée) de porte (62). On comprendra aisément que selon cette caractéristique, la porte peut être montée sur n'importe quelle face verticale de l'armoire, et qu'une armoire peut comporter une ou plusieurs portes.

Toutes les pièces formant l'armoire sont en général métalliques, sauf indication contraire dans le texte qui suit.

Selon un premier mode de réalisation illustré par les figures 3 et 6, les quatre liaisons d'angle associés au quatre sommets du toit T sont respectivement reliées aux quatre sommets du socle S par quatre montants 30 identiques au montant 30 de la figure 1.

Le montant 30 est creux et fermé, et présente une section ayant la forme d'un triangle rectangle isocèle, à l'intérieur duquel vient s'emboîter la partie 21 du pied 20 (visible sur la figure 1), qui présente une section complémentaire à celle du creux du montant 30.

Pour chacun des quatre montants 30, l'angle droit du triangle délimité par les faces 31 et 32, est dirigé vers l'intérieur de l'armoire, tandis que les deux arêtes 33 et 34 situées à la base sont dirigées vers l'extérieur de l'armoire et forment des surfaces d'appui pour des éventuels joints d'étanchéité 80 préalablement déposés sur l'intérieur des panneaux verticaux 63 à 65 et de la porte 62. Les deux faces 31 et 32 sont munis de perforations 35 régulièrement espacées selon l'axe longitudinal L et qui forment le pendant des perforations 15A et 15B des tronçons de profilé associés aux cadres du toit T et du socle S. L'arête formée par les faces 31 et 32 est également munie de perforations 37 régulièrement espacées, pouvant servir à l'introduction d'écrous pour des vis de fixation traversant les perforations 35. Le coté 36 correspondant à l'hypoténuse du triangle rectangle est plein, mais peut être muni de parties défonçables 38, qui une fois défoncée forment une perforation pouvant recevoir des moyens de fixation pour des accessoires.

Selon ce premier mode de réalisation, on comprendra aisément que les montants 30 assurent simultanément une fonction de support mécanique du toit T et une fonction d'étanchéité en association avec les panneaux d'habillage. Chaque montant 30 est ainsi individuellement amovible sans démontage du toit T, par simple desserrage des vis associés aux deux liaisons d'angle correspondantes, puis translation dans une direction horizontale contenue dans le plan bissecteur de l'angle c. Il en résulte que la personne chargée d'installer l'appareillage matériel électrique à l'intérieur de l'armoire peut enlever un ou deux montants 30 pour faciliter l'accès à l'intérieur de l'armoire.

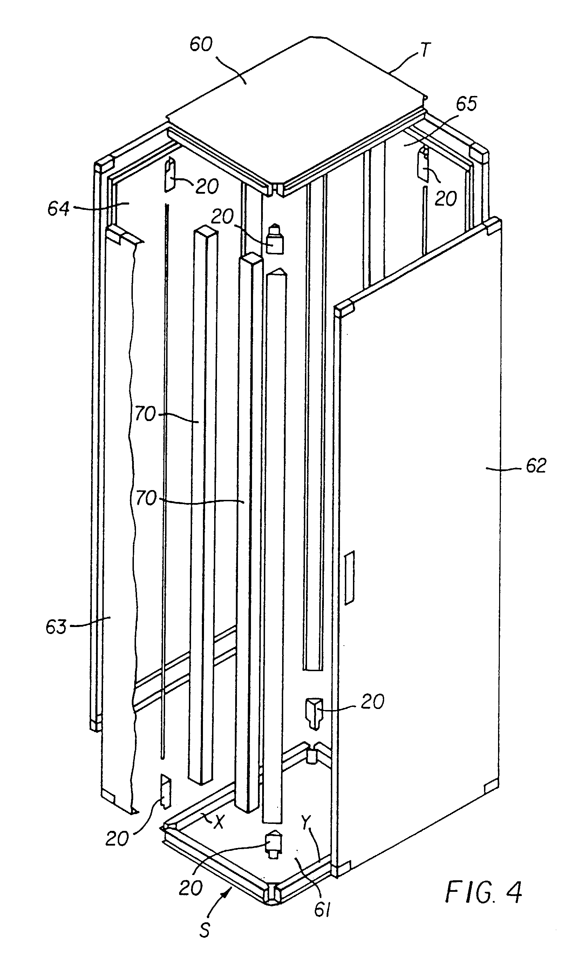

Selon un second mode de réalisation illustré par les figures 4 et 7, les quatre liaisons d'angle associés au quatre sommets du toit T sont respectivement reliées aux quatre sommets du socle S par quatre montants 40 identiques au montant 40 de la figure 1.

Le montant 40 est ouvert et comporte trois cotés 41, 42 et 46 adaptés à recevoir la partie 21 du pied 20 (visible sur la figure 1).

Chacun des quatre montants 40 présente deux arêtes d'extrémité 44 et 45 dirigées vers l'extérieur de l'armoire et formant des surfaces d'appui pour des éventuels joints d'étanchéité 80 préalablement déposés sur l'intérieur des panneaux verticaux 63 à 65 et de la porte 62. Le coté 46 reliant les deux arêtes 44 et 45 est plein.

Les montants 40 assurent essentiellement une fonction d'étanchéité, car ils présentent à l'évidence une résistance mécanique inférieure aux montants 30 décrits en référence au premier mode de réalisation. Pour renforcer la structure de l'armoire, des poteaux verticaux 70 sont disposés entre les tronçons de profilé associés au toit T et ceux associés au socle S. Chaque poteau 70 peut être fixé, par l'intermédiaire de vis (non représentées) traversant les perforations 15, en n'importe quel point intermédiaire X, Y de l'un des quatre tronçons 10 de profilé associé au socle S au point intermédiaire correspondant du tronçon de profilé correspondant associé au toit T. On notera que les poteaux verticaux 70 sont également amovibles par une simple translation horizontale et présentent également des perforations (non représentées) régulièrement espacées, destinées à la fixation d'un châssis supportant l'appareillage électrique.

Les montants 40 n'assurant donc qu'une fonction d'étanchéité, il est possible d'envisager de les fabriquer en matière plastique.

Ce second mode de réalisation de l'armoire selon l'invention offre en plus des avantages déjà décrits en référence au premier mode de réalisation, un très grand degré de flexibilité en ce qui concerne le nombre de poteaux 70 et la position de chacun des poteaux 70, en fonction du poids et de la dimension des appareils électriques, ainsi que de leur répartition spatiale dans le volume intérieur de l'armoire.

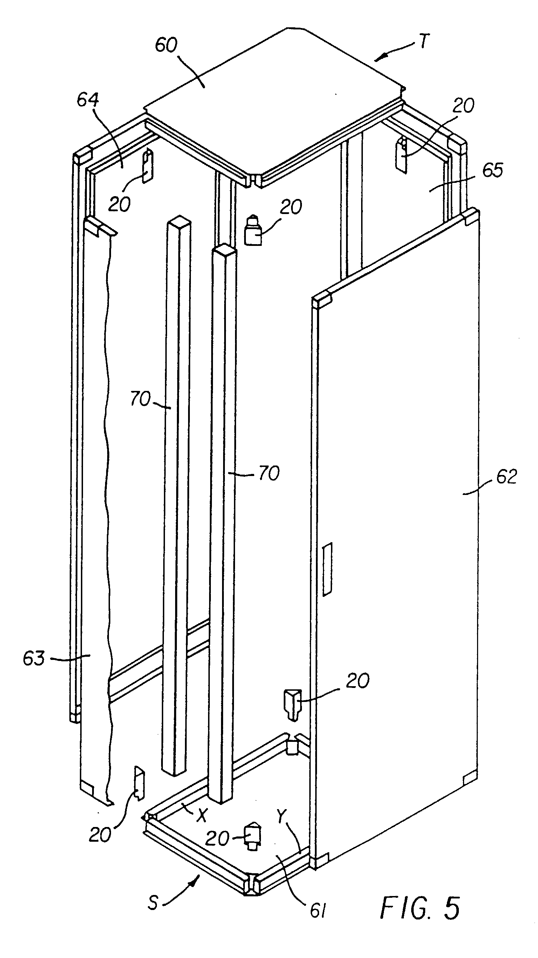

Selon un troisième mode de réalisation de l'armoire illustré par la figure 5, les piliers de l'armoire sont uniquement formés par des poteaux 70. De manière similaire au second mode de réalisation de l'armoire, chaque poteau 70 peut être fixé, par l'intermédiaire de vis traversant les perforations 15, en n'importe quel point intermédiaire X, Y de l'un des quatre tronçons 10 de profilé associé au socle S au point intermédiaire correspondant du tronçon de profilé correspondant associé au toit T; les poteaux verticaux 70 sont également amovibles par une simple translation horizontale et présentent également des perforations (non représentées) régulièrement espacées, destinées à la fixation d'un châssis supportant l'appareillage électrique.

L'armoire correspondante ne présente donc pas le caractère d'étanchéité vis-à-vis de l'extérieur que présente les premier et second modes de réalisation de l'armoire. Par contre, elle permet de dégager complètement les quatre arêtes verticales du parallélépipède que forme l'armoire, et donc d'offrir un espace maximum d'accès à la personne chargée d'installer l'appareillage; de plus, elle permet de répondre à des besoins qui, a priori dans un premier stade, n'exigent pas un indice de protection élevé, tout en laissant la possibilité d'adapter ultérieurement des montants 30, 40 ou 50 qui eux permettent d'apporter un indice de protection plus élevé.

On retiendra des trois modes de réalisation de l'armoire décrits ci-dessus, que n'importe quelle combinaison de montants 30, 40 ou 50 et/ou de poteaux 70 est possible selon les besoins exprimés, pour autant que cette combinaison remplisse les exigences en matière de support mécanique, et que tous les piliers résultant de cette combinaison sont amovibles par simple translation horizontale.

L'armoire selon l'invention offre un très grand degré de flexibilité quant à l'implantation de l'appareillage électrique dans l'armoire, et d'autre part, des possibilités très diverses quant aux éventuelles évolutions et/ou adaptations future d'une telle armoire déjà installée.

On comprendra aisément que dans n'importe lequel des modes de réalisation comprenant notamment deux piliers disposés dans un plan parallèle à la porte 62 de l'armoire, ces deux piliers peuvent en réalité se résumer à un châssis, monobloc ou non, par exemple sous la forme d'une plaque verticale rectangulaire qui se fixe d'une part sur deux tronçons de profilé opposés du toit et d'autre part sur deux tronçons de profilé opposés du socle. Dans ce cas, la hauteur de cette plaque rectangulaire sera tout au plus égale à la distance séparant les faces internes opposées des tronçons de profilé du toit (T) et du socle (S) de manière à ce que la plaque soit amovible par simple translation dans une direction horizontale; sa largeur par contre pourra s'étendre sur toute la largeur extérieure des cadres du toit (T) et du socle (S), de manière d'une part à offrir un maximum de place disponible pour l'appareillage électrique, et d'autre part permettre une continuité avec une éventuelle autre plaque du même type appartenant à l'armoire adjacente.

## Revendications

1. Liaison d'angle pour armoire, notamment armoire pour appareillage électrique, destinée à solidariser par l'intermédiaire de moyens de serrage, d'une part un cadre plan formé par au moins deux tronçons (10A, 10B) de profilé qui, reliés entre eux par l'intermédiaire d'un gousset (11, 111), forment un premier angle saillant (a) , et d'autre part un pied (20, 120) présentant un axe longitudinal (L) perpendiculaire audit cadre plan et pourvu de deux premières surfaces (1A, 1B) parallèles audit axe longitudinal et formant entre elles un second angle (b), ledit gousset (11) comportant deux secondes surfaces (2A, 2B) également parallèles audit axe longitudinal, disposées de manière symétrique de part et d'autre du plan bissecteur dudit premier angle (a), et formant entre elles un troisième angle (c) sensiblement complémentaire à 360° dudit second angle (b), ledit moyen de serrage assurant une pression de serrage entre lesdites deux premières et deux secondes surfaces, caractérisé en ce que le gousset (11, 111) et/ou les tronçons (10A, 10B) du profilé comportent des quatrièmes surfaces (4A, 4B; 4'A, 4'B; 114A, 114B; 114'A, 114'B) sensiblement parallèles au cadre plan et en ce que le pied (20, 120) comporte des cinquièmes surfaces (5A, 5B ; 5'A, 5'B) perpendiculaires à son axe longitudinal et destinées à coopérer avec les quatrièmes surfaces, ledit pied (20, 120) étant agencé pour venir s'emboîter et se mettre en place par simple translation selon une direction parallèle au cadre plan.

2. Liaison d'angle selon la revendication 1, caractérisée en ce que le troisième angle (c) est égal ou légèrement inférieur à l'angle complémentaire à 360° dudit second angle (b), de manière à assurer un effet de coincement desdites premières surfaces entre lesdites secondes surfaces, lors du serrage des moyens de serrage.

3. Liaison d'angle selon la revendication 1, caractérisée en ce que lesdites secondes surfaces se coupent selon une ligne imaginaire, et en ce que le gousset (11) présente une troisième surface (3) parallèle audit axe longitudinal, perpendiculaire au plan bissecteur dudit troisième angle, en retrait de ladite ligne imaginaire et destinée à coopérer avec lesdits moyens de serrage.

4. Liaison d'angle selon l'une quelconque des revendications 1 ou 2, caractérisée en ce que le pied (20, 120) comporte en outre deux sixièmes surfaces (6A, 6B; 126A, 126B) parallèles au plan bissecteur du second angle (b).

5. Liaison d'angle selon l'une quelconque des revendications 1, 2 et 4, caractérisé en ce que le gousset (11) comporte une pièce d'angle (113) présentant deux ailes (113A, 113B) qui forment entre elles le troisième angle (c) et dont le contour correspond à la section des tronçons (10A, 10B) de profilé.

6. Liaison d'angle selon l'une quelconque des revendications 1, 2 et 4, caractérisée en ce que lesdites quatrièmes surfaces (114A, 114B; 114'A, 114'B) sont réalisées par des ouvertures (115A, 115B) pratiquées dans des ailes (113A, 113B) du gousset (111), et en ce que les cinquièmes surfaces (5A, 5B; 5'A, 5'B) sont portées par des ergots (125A, 125B) disposés en saillie sur les premières surfaces (1A, 1B).

7. Liaison d'angle selon l'une quelconque des revendications 1 à 4, caractérisée en ce que les quatrièmes surfaces (4A, 4B ; 4'A, 4'B) sont formées par les parois intérieures des tronçons (10A, 10B) de profilé, les secondes surfaces (2A, 2B) venant respectivement s'encastrer, au moins partiellement, dans les tronçons (10A, 10B) de profilé.

8. Liaison d'angle selon l'une quelconque des revendications 1 à 7, caractérisée en ce que les moyens de serrage comprennent une vis ou un boulon dont l'axe se situe dans le plan bissecteur dudit troisième angle, perpendiculairement audit axe longitudinal, et en ce que ledit pied (20, 120) est adapté à recevoir un montant (30, 40, 50) perpendiculaire audit cadre plan.

9. Liaison d'angle selon l'une quelconque des revendications 1 à 8, caractérisée en ce que les deux secondes surfaces (2A, 2B) sont en outre respectivement soudées sur les deux tronçons (10A, 10B) de profilé creux.

10. Armoire pour appareillage électrique ayant la forme d'un parallélépipède caractérisée en ce qu'elle comprend:
- un socle (S) et un toit (T) disposés horizontalement et comportant chacun un cadre plan rectangulaire formé par quatre tronçons de profilé reliés entre deux à deux par l'intermédiaire d'un gousset (11, 111);
- une pluralité de piliers (30; 40; 50; 70) verticaux reliant le cadre plan du toit (T) au cadre plan du socle (S);
- huit liaisons d'angle selon l'une quelconque des revendications 1 à 9, respectivement disposées aux huit sommets du parallélépipède;
- des panneaux d'habillage (60 à 65) pour habiller les faces du parallélépipède

11. Armoire selon la revendication 10, caractérisée en que les piliers (30; 40; 50; 70) sont individuellement amovibles sans démontage du socle (S) et/ou du toit (T).

12. Armoire selon la revendication 10 ou 11, caractérisée en ce que chaque pied (20) associé à chacune des huit liaisons d'angle comporte en outre un dispositif de fixation (27), destiné à recevoir un accessoire, tel qu'un gond pour une charnière de porte (62).

13. Armoire selon l'une quelconque des revendications 10 à 12, caractérisée en ce que les piliers incluent au moins deux montants (30) reliant respectivement deux à deux, les quatre pieds (20) de liaison d'angle disposés selon une face verticale du parallélépipède.

14. Armoire selon l'une quelconque des revendications 10 à 13, caractérisée en ce que les piliers incluent au moins un poteau (70) reliant un point intermédiaire (X, Y) d'un tronçon de profilé du toit (T) à un autre point intermédiaire (X', Y') d'un tronçon de profilé du socle (S).

15. Armoire selon l'une des revendications 10 à 14, caractérisée en ce que les quatre tronçons de profilé respectivement associés au socle (S) et/ou au toit (T) sont intégrées au(x) panneau(x) d'habillage (61, 60) associé(s) respectivement au socle et/ou au toit par simple pliage selon la périphérie du panneau d'habillage.

16. Armoire selon l'une quelconque des revendications 10 à 15, caractérisée en ce que les tronçons (10A, 10B) de profilé sont creux, les faces des profilés orientées vers l'intérieur du volume parallélépipédique étant munis de perforations (15A, 15B) régulièrement espacées, et en ce que chaque tronçon (10A, 10B) de profilé présente en outre une aile (16) disposée en saillie, dirigée vers l'extérieur de l'armoire et formant une première gouttière.

17. Armoire selon la revendication 16, caractérisée en que chaque pied comporte en outre des secondes gouttières (26) en prolongement des premières gouttières, et un bec verseur (29) adapté à évacuer l'eau collectée par les gouttières (16, 26).

18. Armoire selon l'une quelconque des revendications 13 à 17, caractérisée en ce que les montants (30) sont réalisés dans un premier profilé fermé qui présente une section ayant la forme d'un triangle rectangle isocèle dont l'angle droit est dirigé vers l'intérieur de l'armoire, dont les deux angles à la base forment respectivement deux arêtes d'étanchéité (33, 34) dirigées vers l'extérieur de l'armoire et dont les deux côtés (31, 32) perpendiculaires sont munis de perforations (35) régulièrement espacées.

19. Armoire selon l'une quelconque des revendications 13 à 17, caractérisée en ce que les montants (40) sont réalisés dans un second profilé ouvert qui présente deux arêtes d'étanchéité (43, 44) dirigées vers l'extérieur de l'armoire.

20. Armoire selon l'une quelconque des revendications 10 à 19, caractérisée en ce que les quatre goussets (11, 111) disposés aux quatre sommets associés au toit (T) sont adaptés à recevoir respectivement quatre anneaux de levage, et en ce que les quatre goussets (11, 111) disposés aux quatre sommets associés au socle (S) sont adaptés à recevoir des moyens de réglage du niveau de l'armoire et/ou des moyens de fixation sur une embase.

## Patentansprüche

1. Eckverbindung für einen Schrank, insbesondere einen Schrank zur Aufnahme elektrischer Schaltgeräte, die dazu dient, mit Hilfe von Spannmitteln einerseits einen Flachrahmen, der aus mindestens zwei, über einen Eckeinsatz (11, 111) miteinander verbundenen und zusammen einen ersten ausspringenden Winkel (a) bildenden Profilabschnitten (10A, 10B) besteht und anderseits einen Fuß (20, 120) miteinander zu verbinden, dessen Längsachse (L) senkrecht zum genannten Flachrahmen verläuft und der zwei, parallel zur genannten Längsachse angeordnete und miteinander einen zweiten Winkel (b) bildende erste Flächen (1A, 1B) aufweist, wobei der genannte Eckeinsatz (11) zwei zweite Flächen (2A und 2B) aufweist, die ebenfalls parallel zur genannten Längsachse sowie symmetrisch zu beiden Seiten der Ebene der Winkelhalbierenden des genannten ersten Winkels (a) angeordnet sind und miteinander einen annähernd dem 360°-Komplementärwinkel des genannten zweiten Winkels (b) entsprechenden dritten Winkel (c) bilden, wobei das genannte Spannmittel einen Anpreßdruck zwischen den genannten beiden ersten und beiden zweiten Flächen gewährleistet, dadurch gekennzeichnet, daß der Eckeinsatz (11, 111) und/oder die Profilabschnitte (10A, 10B) annähernd parallel zum Flachrahmen angeordnete vierte Flächen (4A, 4B; 4'A, 4'B; 114A, 114B; 114'A, 114'B) aufweisen und der Fuß (20, 120) senkrecht zu seiner Längsachse angeordnete fünfte Flächen (5A, 5B; 5'A, 5'B) aufweist, die dazu dienen, mit den genannten vierten Flächen zusammenzuwirken, wobei der genannte Fuß (20, 120) so ausgelegt ist, daß er durch einfaches Verschieben in einer parallel zum Flachrahmen verlaufenden Richtung eingesteckt und montiert werden kann.

2. Eckverbindung nach Anspruch 1, dadurch gekennzeichnet, daß der dritte Winkel (c) genauso groß wie oder geringfügig kleiner als der 360°-Komplementärwinkel des genannten zweiten Winkels (b) ist, derart daß beim Spannen der Spannmittel ein Einklemmen der genannten ersten Flächen zwischen den genannten zweiten Flächen gewährleistet wird.

3. Eckverbindung nach Anspruch 1, dadurch gekennzeichnet, daß sich die genannten zweiten Flächen entlang einer imaginären Linie schneiden und daß der Eckeinsatz (11) eine, parallel zur genannten Längsachse, senkrecht zur Ebene der Winkelhalbierenden des genannten dritten Winkels und hinter der genannten imaginären Linie angeordnete dritte Fläche aufweist, die dazu dient, mit den genannten Spannmitteln zusammenzuwirken.

4. Eckverbindung nach irgendeinem der Ansprüche 1 oder 2, dadurch gekennzeichnet, daß der Fuß (20, 120) darüber hinaus, parallel zur Ebene der Winkelhalbierenden des zweiten Winkels (b) angeordnete zwei sechste Flächen (6A, 6B; 126A, 126B) aufweist.

5. Eckverbindung nach irgendeinem der Ansprüche 1, 2 und 4, dadurch gekennzeichnet, daß der Eckeinsatz (11) ein Winkelelement (113) mit zwei Schenkeln (113A, 113B) aufweist, die miteinander den dritten Winkel (c) bilden und deren Umriß dem Querschnitt der Profilabschnitte (10A, 10B) entspricht.

6. Eckverbindung nach irgendeinem der Ansprüche 1, 2 und 4, dadurch gekennzeichnet, daß die genannten vierten Flächen (114A, 114B; 114'A, 114'B) durch in den Schenkeln (113A, 113B) des Eckeinsatzes (111) ausgebildete Aussparungen (115A, 115B) gebildet werden und daß die fünften Flächen (5A, 5B; 5'A, 5'B) an Vorsprüngen (125A, 125B) ausgebildet sind, die aus den ersten Flächen (1A, 1B) hervorstehen.

7. Eckverbindung nach irgendeinem der Ansprüche 1 bis 4, dadurch gekennzeichnet, daß die vierten Flächen (4A, 4B; 4'A, 4'B) durch die unteren Wände der Profilabschnitte (10A, 10B) gebildet werden, wobei die zweiten Flächen (2A, 2B) zumindest teilweise in die jeweiligen Profilabschnitte (10A, 10B) eingreifen.

8. Eckverbindung nach irgendeinem der Ansprüche 1 bis 7, dadurch gekennzeichnet, daß die Spannmittel eine Schraube oder einen Gewindebolzen umfassen, deren Achse in der Ebene der Winkelhalbierenden des genannten dritten Winkels, senkrecht zur genannten Längsachse verläuft und daß der genannte Fuß (20, 120) dazu ausgelegt ist, ein senkrecht zum genannten Flachrahmen angeordnetes Längsprofil (30, 40, 50) aufzunehmen.

9. Eckverbindung nach irgendeinem der Ansprüche 1 bis 8, dadurch gekennzeichnet, daß die beiden zweiten Flächen (2A, 2B) darüber hinaus jeweils mit dem zugehörigen Hohlprofilabschnitt (10A, 10B) verschweißt sind

10. Quaderförmiger Schrank für elektrische Schaltgeräte, dadurch gekennzeichnet, daß er folgende Teile umfaßt:
- einen Boden (S) und ein Dach (T), die waagerecht angeordnet sind und jeweils einen rechteckigen Flachrahmen umfassen, der durch vier, paarweise über jeweils einen Eckeinsatz miteinander verbundene Profilabschnitte gebildet wird;
- mehrere, den Flachrahmen des Dachs (T) mit dem Flachrahmen des Bodens (S) verbindende senkrechte Stützen (30, 40, 50; 70);
- acht Eckverbindungen nach irgendeinem der Ansprüche 1 bis 9, die jeweils an den acht Eckpunkten des Quaders angeordnet sind;
- Verkleidungsbleche (60 bis 65) zur Verkleidung der Seiten des Quaders.

11. Schrank nach Anspruch 10, dadurch gekennzeichnet, daß die Stützen (30; 40; 50; 70) einzeln ausgebaut werden können, ohne den Boden (5) und/oder das Dach (T) abnehmen zu müssen.

12. Schrank nach Anspruch 10 oder 11, dadurch gekennzeichnet, daß jeder einzelne der, jeder der acht Eckverbindungen zugeordneten Füße (20) darüber hinaus eine Befestigungsvorrichtung (27) aufweist, die dazu dient, ein Zusatzteil wie beispielsweise eine Angel für ein Scharnier der Tür (62) aufzunehmen.

13. Schrank nach irgendeinem der Ansprüche 10 bis 12, dadurch gekennzeichnet, daß die Stützen mindestens zwei Längsprofile (30) umfassen, die die vier, an einer senkrechten Seite des Quaders angeordneten Eckverbindungsfüße (20) paarweise miteinander zu verbinden.

14. Schrank nach irgendeinem der Ansprüche 10 bis 13, dadurch gekennzeichnet, daß die Stützen mindestens eine Strebe (70) umfassen, die einen Zwischenpunkt (X, Y) eines Profilabschnitts des Dachs (T) mit einem anderen Zwischenpunkt (X'. Y') eines Profilabschnitts des Bodens (S) verbindet.

15. Schrank nach irgendeinem der Ansprüche 10 bis 14, dadurch gekennzeichnet, daß die vier, dem Boden (S) und/oder dem Dach (T) zugeordneten Profilabschnitte durch einfaches Umbiegen längs der Umrißlinie des jeweiligen Verkleidungsblechs in das (die) jeweils dem Boden und/oder dem Dach zugeordnete(n) Verkleidungsblech(e) (61, 60) integriert ist (sind).

16. Schrank nach irgendeinem der Ansprüche 10 bis 15, dadurch gekennzeichnet, daß die Profilabschnitte (10A, 10B) hohl ausgeführt sind, wobei die dem Quaderinnenraum zugewandten Seiten der Profile mit in gleichmäßigen Abständen angeordneten Aussparungen (15A, 15B) versehen sind, und daß jeder Profilabschnitt (10A, 10B) darüber hinaus eine hervorstehende Rippe (16) aufweist, die vom Schrank weg nach außen gerichtet ist und eine erste Rinne bildet.

17. Schrank nach Anspruch 16, dadurch gekennzeichnet, daß jeder Fuß darüber hinaus in Verlängerung der ersten Rinnen zweite Rinnen (26) sowie einen Ablaufschnabel (29) zur Ableitung des von den Rinnen (16, 26) aufgefangenen Wassers aufweist.

18. Schrank nach irgendeinem der Ansprüche 13 bis 17, dadurch gekennzeichnet, daß die Längsprofile (30) als erstes geschlossenes Profil mit einem Querschnitt in Form eines gleichschenkligen, rechtwinkligen Dreiecks ausgebildet sind, dessen rechter Winkel dem Innenraum des Schranks zugewandt ist, dessen beide Grundlinienwinkel jeweils zwei vom Schrank weg nach außen gerichtete Dichtkanten (33, 34) bilden, und dessen beide senkrecht aufeinander stehenden Seiten (31, 32) mit in gleichmäßigen Abständen angeordneten Aussparungen (35) versehen sind.

19. Schrank nach irgendeinem der Ansprüche 13 bis 17, dadurch gekennzeichnet, daß die Längsprofile (40) als zweites offenes Profil mit zwei vom Schrank weg nach außen gerichteten Dichtkanten (43, 44) ausgebildet sind.

20. Schrank nach irgendeinem der Ansprüche 10 bis 19, dadurch gekennzeichnet, daß die vier, an den vier dem Dach zugeordneten Eckpunkten angeordneten Eckeinsätze (11, 111) dazu ausgelegt sind jeweils vier Tragösen aufzunehmen, und daß die vier, an den vier dem Boden zugeordneten Eckpunkten angeordneten Eckeinsätze (11, 111) dazu ausgelegt sind, Mittel zur Niveauregulierung des Schranks und/oder Mittel zur Befestigung auf einer Unterlage aufzunehmen.

## Claims

1. A corner junction for a cabinet, notably a cabinet for electrical switchgear, designed to securedly join by means of securing means, on the one hand a plane frame formed by at least two profile sections (10A, 10B) which, joined together by means of a gusset plate (11, 111), form a first salient angle (a), and on the other hand a foot (20, 120) presenting a longitudinal axis (L) perpendicular to said plane frame and provided with two first surfaces (1A, 1B) parallel to said longitudinal axis and forming between them a second angle (b), said gusset plate (11) comprising two second surfaces (2A, 2B) also parallel to said longitudinal axis, disposed symmetrically on each side of the plane bisecting said first angle (a), and forming between them a third angle (c) appreciably complementary to 360° to said second angle (b), said securing means providing a clamping pressure between said two first and second surfaces, characterized in that the gusset plate (11, 111) and/or the profile sections (10A, 10B) comprise fourth surfaces (4A, 4B; 4'A, 4'B; 114A, 114B; 114'A, 114'B) appreciably parallel to the plane frame and that the foot (20, 120) comprises fifth surfaces (5A, 58; 5'A, 5'B) perpendicular to its longitudinal axis and designed to cooperate with the fourth surfaces, said foot (20, 120) being arranged to engage and fit in place by simple translation in a direction parallel to the plane frame.

2. The corner junction according to claim 1, characterized in that the third angle (c) is equal to or slightly smaller than the angle complementary to 360° to said second angle (b), so as to ensure a jamming effect of said first surfaces between said second surfaces when the securing means are tightened.

3. The corner junction according to claim 1, characterized in that said second surfaces cross along an imaginary line, and that the gusset plate (11) presents a third surface (3) parallel to said longitudinal axis, perpendicular to the plane bisecting the third angle, set back from said imaginary line and designed to cooperate with said securing means.

4. The corner junction according to either of the claims 1 or 2, charactenzed in that the foot (20, 120) comprises in addition two sixth surfaces (6A, 68; 126A, 1268) parallel to the plane bisecting the second angle (b).

5. The corner junction according to any one of the claims 1, 2 and 4, characterized in that the gusset plate (11) comprises a corner piece (113) presenting two wings (113A, 113B) which form between them the third angle (c) and whose outline corresponds to the cross-section of the profile sections (10A, 10B).

6. The corner junction according to any one of the claims 1, 2 and 4, characterized in that said fourth surfaces (114A, 114B; 114'A, 114'B) are achieved by openings (115A, 115B) made in wings (113A, 113B) of the gusset plate (111), and that the fifth surfaces (5A, 5B; 5'A. 5'B) are supported by spigots (125A, 125B) arranged salient on the first surfaces (1A, 1B).

7. The corner junction according to any one of the claims 1 to 4, charactenzed in that the fourth surfaces (4A, 48; 4'A, 4'B) are formed by the internal walls of the profile sections (10A, 10B), the second surfaces (2A, 28) fitting respectively, at least partially, into the profile sections (10A, 10B).

8. The corner junction according to any one of the claims 1 to 7, charactenzed in that the securing means compnse a screw or bolt whose axis is located in the plane bisecting said third angle, perpendicularly to said longitudinal axis, and that said foot (20, 120) is designed to receive an upright (30, 40, 50) perpendicular to said plane frame.

9. The corner junction according to any one of the claims 1 to 8, charactenzed in that the two second surfaces (2A, 28) are in addition respectively welded onto the two hollow profile sections (10A, 10B).

10. A cabinet for electrical switchgear having the shape of a parallelepiped characterized in that it comprises :
- a base (S) and a roof (T) disposed honzontally and each comprising a rectangular plane frame formed by four profile sections joined together two by two by means of a gusset plate (11, 111);
- a plurality of vertical pillars (30, 40, 50, 70) joining the plane frame of the roof (T) to the plane frame of the base (S);
- eight corner junctions according to any one of the claims 1 to 9, respectively located at the eight apexes of the parallelepiped;
- covenng panels (60 to 65) to dress the faces of the parallelepiped.

11. The cabinet according to claim 10, characterized in that the pillars (30; 40; 50; 70) are individually removable without disassembling the base (S) and/or roof (T).

12. The cabinet according to claim 10 or 11, charactenzed in that each foot (20) associated to each of the eight corner junctions comprises in addition a fixing device (27), designed to receive an accessory such as a hinge-pin for a hinge of a door (62).

13. The cabinet according to any one of the claims 10 to 12, characterized in that the pillars include at least two uprights (30) respectively joining two by two the four feet (20) of the corner junctions disposed according to a vertical face of the parallelepiped.

14. The cabinet according to any one of the claims 10 to 13, characterized in that the pillars include at least one post (70) joining an intermediate point (X, Y) of a profile section of the roof (T) to another intermediate point (X', Y') of a profile section of the base (S).

15. The cabinet according to any one of the claims 10 to 14, characterized in that the four profile sections respectively associated to the base (S) and/or roof (T) are integrated in the dressing panel(s) (61, 60) respectively associated to the base and/or roof by simple folding along the periphery of the dressing plate.

16. The cabinet according to any one of the claims 10 to 15, characterized in that the profile sections (10A, 10B) are hollow, the faces of the profiles facing the inside of the parallelepipedic volume being provided with regularly spaced perforations (15A, 15B), and that each profile section (10A, 10B) presents in addition a salient wing (16) directed towards the outside of the cabinet and forming a first gutter.

17. The cabinet according to claim 16, charactenzed in that each foot comprises in addition second gutters (26) extending the first gutters, and a spout (29) designed to remove the water collected by the gutters (16, 26).

18. The cabinet according to any one of the claims 13 to 17, characterized in that the upnghts (30) are made from a first closed profile which presents a cross-section having the shape of an isosceles rectangular triangle whose nght angle is directed towards the inside of the cabinet, whose two angles at the base respectively form two sealing edges (33, 34) directed towards the outside of the cabinet and whose two perpendicular sides (31, 32) are provided with regularly spaced perforations (35).

19. The cabinet according to any one of the claims 13 to 17, charactenzed in that the uprights (40) are made from a second open profile which presents two sealing edges (43, 44) directed towards the outside of the cabinet.

20. The cabinet according to any one of the claims 10 to 19, charactenzed in that the four gusset plates (11, 111) disposed at the four apexes associated to the roof (T) are designed to receive respectively four hoisting rings, and that the four gusset plates (11, 111) disposed at the four apexes associated to the base (S) are designed to receive means for adjusting the level of the cabinet and/or means for fixing on a base.
